# EUROPEAN PATENT SPECIFICATION

(11) **EP 3 465 304 B1**
(45) Date of publication and mention of the grant of the patent: **13.03.2024**
(21) Application number: 17827011.2
(22) Date of filing: 13.07.2017
(51) Int. Cl.: G02B 6/42, G02B 6/293

(54) **WAVELENGTH DIVISION MULTIPLEXER/DEMULTIPLEXER WITH FLEXIBILITY OF OPTICAL ADJUSTMENT**
WELLENLÄNGENMULTIPLEXER/-DEMULTIPLEXER MIT FLEXIBILITÄT EINER OPTISCHEN EINSTELLUNG
MULTIPLEXEUR/DÉMULTIPLEXEUR PAR RÉPARTITION EN LONGUEUR D'ONDE AVEC FLEXIBILITÉ DE RÉGLAGE OPTIQUE

(30) Priority: 13.07.2016 US 201662361865 P; 18.05.2017 US 201715598518
(43) Date of publication of application: 10.04.2019
(73) Proprietor: Huawei Technologies Co., Ltd., Longgang District Shenzhen, Guangdong 518129 (CN)
(72) Inventor: MIAO, Rongsheng, San Jose, California 95131 (US); BAI, Yusheng, Los Altos Hills, California 94022 (US)
(74) Representative: Pfenning, Meinig & Partner mbB
(86) International application number: PCT/CN2017/092810
(87) International publication number: WO 2018/010675

(56) References cited:
- WO-A1-01/02887
- CN-U- 201 936 033
- CN-Y- 2 490 769
- JP-A- 2016 033 601
- US-A- 4 244 045
- US-A1- 2003 152 113
- US-A1- 2004 101 247
- US-A1- 2004 165 828
- US-A1- 2006 198 576
- US-A1- 2009 103 866
- US-A1- 2014 346 323
- US-B1- 8 537 468

## Description

### BACKGROUND

A passive optical network (PON) is one system for providing network access over the last mile. A PON may be a point-to-multipoint (P2MP) network with passive splitters positioned in an optical distribution network (ODN) to enable a single feeding fiber from a central office to serve multiple customer premises. A PON may employ one wavelength for upstream traffic and another for downstream traffic on a single fiber. For example, the upstream traffic may be carried by a 1310 nanometer (nm) wavelength light and the downstream traffic may be carried by a 1490 nm wavelength light. As such, a PON transceiver may employ a transmitter optical sub-assembly (TOSA) package and a receiver optical sub-assembly (ROSA) package to couple an outgoing light emitted from a transmitter optically with a single fiber and also to couple an incoming light from the single fiber to a receiver.

Wavelength division multiplexers/demultiplexers are widely used in fiber optic TOSA/ROSA packages in both telecommunication and data center industries. In current markets, demand for small size and low cost modules, like Quad Small Form-Factor Pluggable 28 (QSFP28 and uQSFP28) packages, is increasing. This is especially true in the data center applications, which require miniaturization and low cost for the TOSA/ROSA packages. The typical multiplexer/demultiplexer (mux/demux) consists of multiple standalone components in the packaging, such as a fiber receptacle, a collimate lens, an optic mux/demux block, and a focal lens array. Integration of these components into a single piece monolithic component is a typical solution to reduce the size and cost. For example, the monolithic component may be made from Ultem^{®} plastic, which is widely used in optical packaging due to Ultem^{®} plastic having stable mechanical and thermal characteristics. An example of a prior art wavelength division mux/demux can be found in U.S. Patent No. 6,201,908, which discloses a fiber optic fiber receptacle, a collimate lens, an internal reflector, as well as an aspheric lens molded in a single piece. US 2004/0101247 A1 proposes a filter based multiplexer/demultiplexer system that includes a pre-formed lens block arranged with a pre-formed mirror-filter block. The pre-formed mirror-filter block includes a flat mirror and accommodates an array of filters arranged so that light entering the mirror-filter block from the lens block is reflected between the array of filters and the flat mirror. The lens block includes placement for a collimating lens and for a plurality of focusing lenses. The lens block includes an integrally formed barrel for receiving, holding, and aligning an optical fiber. The collimating lens is positioned such that light transmitted into the lens block from the optical fiber is collimated and light transmitted into the optical fiber from the lens block is focused on the optical fiber. Each lens of the array of focusing lenses is position to focus light from an array of optical filters positioned between the mirror-filter block and the lens block onto one of an array of optical devices. The optical devices can be optical detectors, optical fibers, or optical sources. US 2014/0346323 discloses an optical module that receives optical signals each having a specific wavelength different from others. The optical module includes an intermediate assembly, a plurality of lenses, a plurality of photodiodes, and a housing. The intermediate assembly includes an optical de-multiplexer, an optical reflector, and a base. The optical de-multiplexer de-multiplexes the optical signals incoming to the optical module depending on the specific wavelengths to generate a plurality of de-multiplexed optical signals. The optical reflector reflects the de-multiplexed optical signals toward respective PDs. The base mounts the optical de-multiplexer and the optical reflector thereon. Each of lenses concentrates the de-multiplexed optical signal reflected by the optical reflector on respective PDs.The housing includes a bottom, a side, and a lid to form a space into which the intermediate assembly, the lenses, and the PDs are enclosed. A feature of the optical module is that the optical reflector, the lenses, and the PDs are arranged vertically with respect to the bottom of the housing.

### SUMMARY

The current invention provides an optical wavelength division multiplexer/demultiplexer according to independent claim 1 , a and a method of optical wavelength division demultiplexing according to independent claim 6. Further embodiments are provided by the dependent claims.

Any of the embodiments may be combined with any other embodiment to create a new embodiment. The features of the embodiments will be more clearly understood from the following detailed description taken in conjunction with the accompanying drawings and claims.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
FIGS. 1A, 1B, and 1C illustrate a multiview orthographic projection of a mux/demux apparatus in accordance with various embodiments, not forming part of the claimed invention;
FIGS. 2A and 2B illustrate a mux/demux apparatus having an internal reflector in accordance with various embodiments, not forming part of the claimed invention;
FIGS. 3A and 3B illustrate a mux/demux apparatus having an external reflector in accordance with various embodiments, not forming part of the claimed invention;
FIG. 4 illustrates an exemplary demultiplexing of multiple wavelengths in a demultiplexing block in accordance with various embodiments, not forming part of the claimed invention;
FIGS. 5A, 5B, and 5C illustrate a folding prism and an optical path inside the folding prism in accordance with various embodiments, not forming part of the claimed invention;
FIGS. 6A, 6B, and 6C illustrate a stepped folding prism and an optical path inside the stepped folding prism in accordance with the claimed invention;
FIG. 7 illustrates a perspective view of a packaged demultiplexer in accordance with various embodiments, not forming part of the claimed invention;
FIG. 8 illustrates focal points offset from a centerline of a packaged demultiplexer in accordance with various embodiments, not forming part of the claimed invention; and
FIG. 9 illustrates a flowchart of a method of optical demultiplexing of multiple, not forming part of the claimed invention;

### DETAILED DESCRIPTION

It should be understood at the outset that although an illustrative implementation of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein.

The previously discussed monolithic optical package may have drawbacks in optimizing the optical performance and component layout due to manufacturing limitations. Since all the components are molded in a single piece, the mux/demux does not allow for any optical adjustment during assembly. Therefore, an incident angle into the mux/demux as well as the accuracy of the pitch and locations of optical focal points are pre-determined by the accuracy of the components as well as the accuracy of the bonding processes. This may result in both unfavorable optical performance and cost of assembly. As such, the present disclosure identifies a need for improved miniaturization, reduced cost, and optical performance in optical packages.

Disclosed herein is a mux/demux apparatus having a single molded component comprising a receptacle, a demultiplexer block, a folding prism, or a combination thereof, which can result in more accurate and cost effective multiplexer and demultiplexer apparatuses. The mux/demux apparatus also includes a reflector that can be either fixed or adjustably-affixed during assembly. A fixed reflector is part of a single piece molded apparatus. An adjustably-affixed reflector is bonded to the single molded component after the reflector is aligned and adjusted for optical performance during the assembly process. The adjustably-affixed reflector can be adjusted to control both the incident angle and the incident location with the demultiplexer block. Further, an optical path of the light beam, which defines a first plane, travels through the reflector and the demultiplexer to the folding prism, and exits the folding prism in a direction substantially perpendicular to the first plane, and light focal points are located off a centerline of the apparatus.

The various embodiments disclosed herein will be described as a demultiplexer, although the same embodiments can also be implemented as a multiplexer by reversing the optical path. The disclosed mux/demux can be used in high speed TOSA/ROSA applications. Further, the mux/demux may be advantageous due to the high integration of packaging of single molded components, and due to the flexible optical adjustment of the reflector.

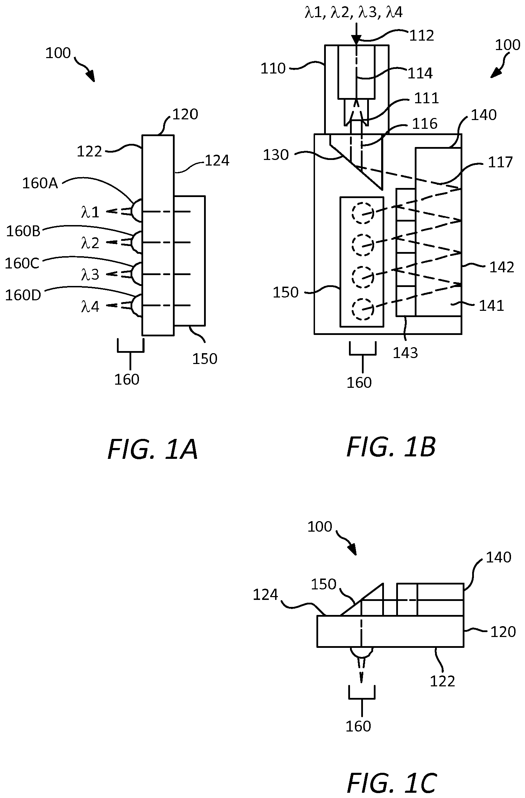

In accordance with various embodiments, FIGS. 1A, 1B, and 1C illustrate first side, top side, and second side projection views of an optical wavelength division demultiplexer 100. The optical wavelength division demultiplexer 100 comprises a receptacle 110 having a collimate lens 111 and configured to receive an inlet light 114; a substrate 120 having a first side 122 and a second side 124; a reflector 130 mounted to the second side 124 of the substrate 120 and configured to reflect the inlet light 114 at an angle; a demultiplexer block 140 coupled to the second side 124 of the substrate 120 and configured to receive the inlet light 114 from the reflector 130, wherein the demultiplexer block 140 separates the inlet light 114 into multiple wavelengths (λ1, λ2, λ3, and λ4); a folding prism 150 coupled to the second side 124 of the substrate 120 and configured to receive the multiple wavelengths from the demultiplexer block 140 and refract the multiple wavelengths; and a focal lens array 160 coupled to the first side 122 of the substrate 120 substantially opposite the folding prism 150 and configured to receive and focus the refracted multiple wavelengths. While four wavelengths (λ1, λ2, λ3, and λ4) are shown, more or fewer wavelengths are within the scope of this disclosure.

The receptacle 110 can support communication via an optical interface. Further, the inlet light 114 from a fiber 112 embedded in the receptacle 110, either single mode or multi-mode, becomes a collimated beam 116 through the collimate lens 111.

In various embodiments, the reflector 130 is mounted to the substrate 120 and configured to reflect a collimated beam 116, for example to reflect the collimated beam 116 at a substantially right angle. For example, the collimated beam 116 is reflected at 90° (degrees), within 85° to 95°, or within 80° to 100° from the direction of the collimated beam 116 exiting the reflector 130 relative to the direction entering the reflector 130. Reflector 130 reflects the collimated beam 116, as reflected beam 117, according to a total internal reflection, toward the demultiplexer block 140. In various embodiments, the reflector 130 is a fixed reflector and molded as part of the apparatus, as shown in FIG. 1. In other embodiments, the reflector 130 is adjustable and mounted to the substrate 120 after alignment during the assembly process.

In various embodiments, the demultiplexer block 140 is coupled to the substrate 120 and configured to receive the reflected beam 117 from the reflector 130. The demultiplexer block 140 comprises an optical block 141 having a reflective surface 142 and a plurality of filters 143 or filter regions. The reflective surface 142 is coated with a reflective layer to reflect the reflected beam 117. The reflective layer can be gold, aluminum, or similar metal, for example. The plurality of filters 143 is configured to filter the multiple wavelengths (λ1, λ2, λ3, and λ4) within the reflected beam 117. The reflected beam 117 is reflected in a zigzag pattern in the demultiplexer block 140 between the plurality of filters 143 and the reflective surface 142. As the reflected beam 117 enters each of the plurality of filters 143, one of n different multiple wavelengths (λ1, λ2, λ3, and λ4) of light is transmitted through each of the plurality of filters 143 and the separated multiple wavelengths (λ1, λ2, λ3, and λ4) move along the optical pathways toward the folding prism 150.

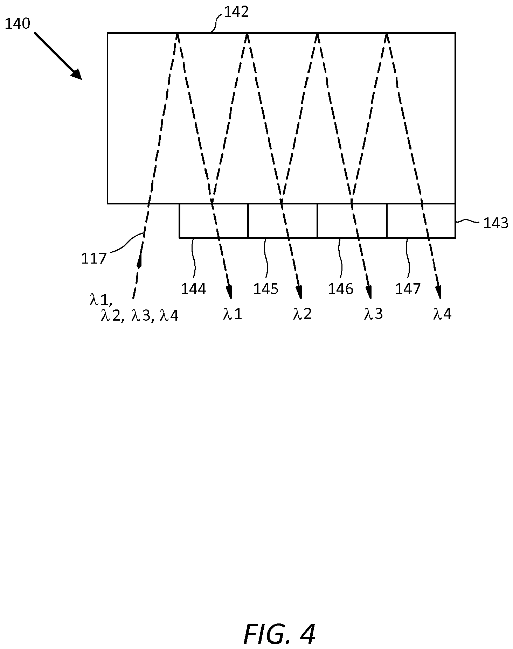

For example and with reference to FIG. 4, reflected beam 117 having multiple wavelengths (λ1, λ2, λ3, and λ4) enters the demultiplexer block 140 with an incident angle. The reflected beam 117 is reflected on the reflective surface 142, and reaches a first filter 144 of the plurality of filters 143. The first filter 144 is configured to substantially allow the first wavelength λ1 to pass through, and reflect the remaining wavelengths (λ2, λ3, and λ4) back to the reflective surface 142. The reflective surface 142 reflects the remaining wavelengths (λ2, λ3, and λ4) back to a second filter 145 of the plurality of filters 143. The second filter 145 of the plurality of filters 143 is configured to allow the second wavelength λ2 to substantially pass through, and reflect the remaining wavelengths (λ3 and λ4) back to the reflective surface 142. The process repeats at a third filter 146 and a fourth filter 147 of the plurality of filters 143 until the reflected beam 117 is demultiplexed into four individual wavelengths. Although the example is presented with four wavelengths, the optical wavelength division demultiplexer 100 can be configured to demultiplex any number of wavelengths.

In various embodiments, the demultiplexer block 140 can be formed from glass or molded plastic. However, it should be understood that other optical materials can be employed in forming the demultiplexer block 140. Further, the demultiplexer block 140 can also be bonded to the optical wavelength division demultiplexer 100 or can be formed as a portion of the optical wavelength division demultiplexer 100.

The folding prism 150 is coupled to the substrate 120 and configured to receive the filtered multiple wavelengths (λ1, λ2, λ3, and λ4) from the demultiplexer block 140 and refract the multiple wavelengths (λ1, λ2, λ3, and λ4). The multiple wavelengths (λ1, λ2, λ3, and λ4) traveling inside the folding prism 150 are refracted into a vertical or near vertical direction down towards the substrate 120, such as shown in FIGS. 1A and 1C. In various embodiments, the folding prism 150 is replaced by a folding mirror, which operates in the same or similar function as the folding prism 150.

The focal lens array 160 comprises focal lenses 160A-D coupled to the substrate 120 opposite the folding prism 150 and configured to receive and focus the refracted multiple wavelengths (λ1, λ2, λ3, and λ4). Although shown with four focal lenses 160A-D, the focal lens array 160 can be configured for any number of wavelengths. The multiple wavelengths (λ1, λ2, λ3, and λ4) of light refracted through the folding prism 150 are focused when passing through each of the focal lenses 160A-D and reach a corresponding photodiode (not shown). The focal lens array 160 can be injection molded to the substrate 120. The lenses of each of the focal lenses 106A-D of the focal lens array 160 can be a ball lens or aspheric lens, and the pitch of the focal lens array 160 is about the same as the pitch of a demultiplexer block, such as demultiplexer block 140. Additionally, the surface of the focal lenses 160A-D can be coated with an anti-reflective layer to reduce back reflection. The anti-reflective layer can comprise multiple layers of materials with different refractive indices.

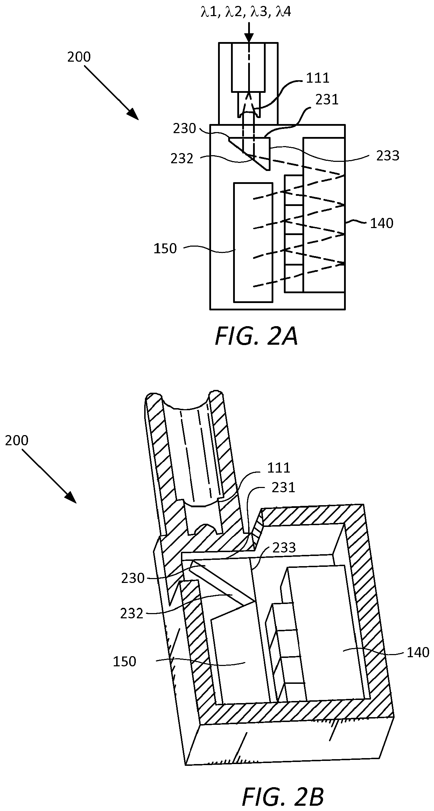

In various embodiments, the reflector 130 can be an internal reflector. FIGS. 2A and 2B illustrate an optical wavelength division demultiplexer 200 similar to the optical wavelength division demultiplexer 100. The optical wavelength division demultiplexer 200 comprises an internal reflector 230 and the demultiplexer block 140. An input beam passes through the internal reflector 230 on a first side 231, reflects off an interior wall 232 of the internal reflector 230, and the reflected beam passes through a third side 233 to the demultiplexer block 140. An incident angle between the initial beam and the exiting beam can be adjusted by rotating the internal reflector 230.

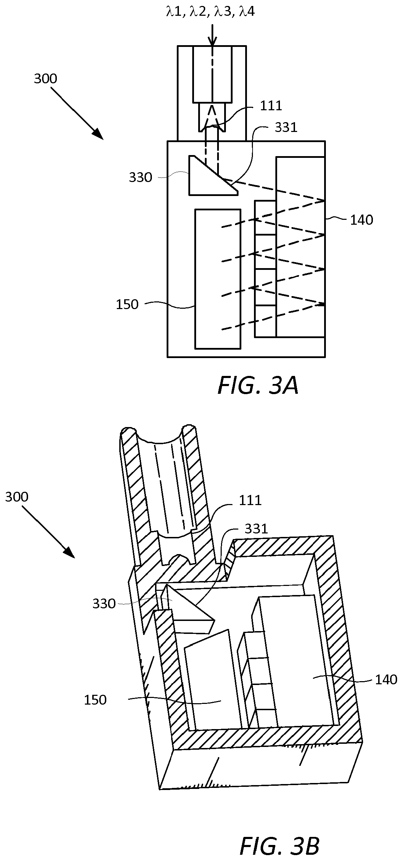

Similarly, in various embodiments, the reflector 130 can be an external reflector. FIGS. 3A and 3B illustrate an optical wavelength division demultiplexer 300 similar to the optical wavelength division demultiplexer 100. The optical wavelength division demultiplexer 300 comprises an external reflector 330 and a demultiplexer block 140. An input beam reflects off the exterior of a side 331 of the external reflector 330 to the demultiplexer block 140. The beam does not pass through the external reflector 330 in this embodiment. Instead, the reflective surface of the side 331 of the external reflector 330 is coated with at least one of a high reflective coating or a metal layer to facilitate reflection of the input beam.

The internal reflector 230 shown in FIGS. 2A and 2B, or the external reflector 330 shown in FIGS. 3A and 3B are adjustably-affixed reflectors that are separate and stand alone from a collimate lens, such as collimate lens 111, and are thus adjustable during the formation of the optical wavelength division demultiplexer 100. The external reflector 330 can be adjusted since the external reflector 330 is accessible during the assembly process. Both the linear position and the angular orientation can be precisely adjusted to control the incident angle and the incident location into the demultiplexer block 140. The angular orientation can be adjusted by adjusting an angle of the reflective surface relative to the collimate lens 111. The linear position of the external reflector 330 can be adjusted by moving the position of the external reflector 330 to be closer to or farther away from the collimate lens 111. The incident angle has an effect on a center wavelength of each channel as well as the pitch of the focal points. After the adjustment is completed, the adjustably-affixed external reflector 330 is bonded in place using adhesives or the like.

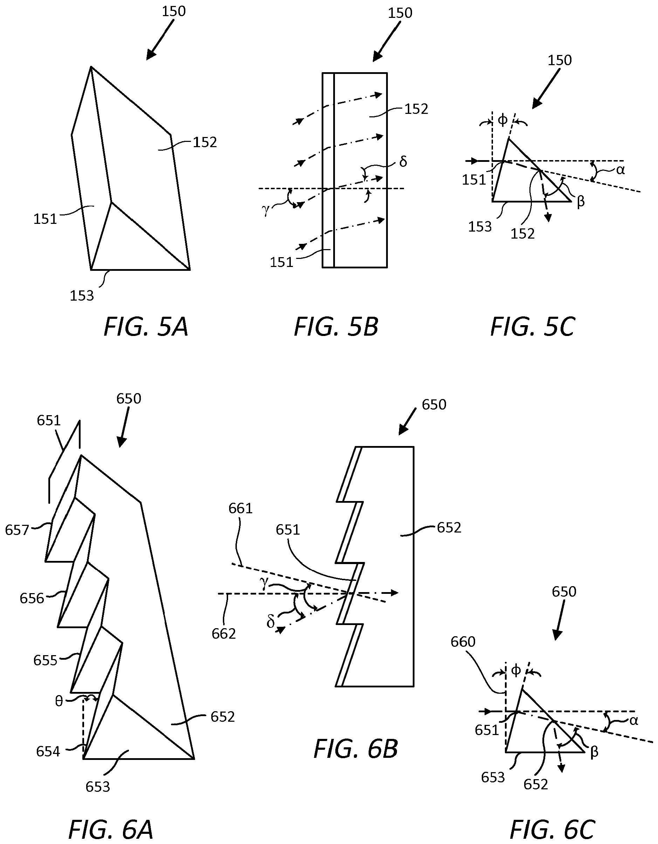

FIGS. 5A, 5B, and 5C illustrate the folding prism 150 and an optical path inside the folding prism 150 in accordance with various embodiments of the disclosure. FIG. 5A is a perspective view of the folding prism 150, FIG. 5B is a top view, and FIG. 5C is an end view. The folding prism 150 has a first surface 151, a second surface 152, and a third surface 153. The first surface 151 is disposed at an angle Φ with respect to vertical 156, as shown in FIG. 5C. Incoming light impinges on the folding prism 150 at an incident angle γ with respect to the first surface 151, as shown in FIG. 5B, with the light arriving from the demultiplexer block (not shown), such as the demultiplexer block 140 of FIG. 4. The folding prism 150 refracts the incoming light by a third angle δ due to the incident angle γ of the light to the first surface 151. The light is refracted in the horizontal plane 155 in FIG. 5B, at the third angle δ, by the first surface 151. The folding prism 150 also refracts the light at a first angle α at the first surface 151 due to the angle Φ of the first surface 151, wherein the entering light is refracted a few degrees downward in FIG. 5C. The magnitude of the first angle α depends on a refraction index of the material of the folding prism 150 and any coatings, as well as the angles within the folding prism 150. The light is reflected down farther at the second surface 152 by a second angle β due to total internal reflection. The light then travels downwards through the third surface 153 into a focal lens array (not shown), such as the focal lens array 160 of FIG. 1. The light travels substantially perpendicular to the third surface 153 in some embodiments as the light exits the folding prism 150.

In an embodiment according to the claimed invention and with reference to FIGS. 6A, 6B, and 6C, the folding prism 150 can be a stepped folding prism 650 having a stepped surface 651, a second surface 652, and a third surface 653. FIG. 6A is a perspective view of the stepped folding prism 650, FIG. 6B is a top view, and FIG. 6C is an end view simplified by omitting the stepped features of the stepped surface 651. The stepped folding prism 650 includes light-receiving faces 654, 655, 656, 657 that together form the stepped surface 651. Each light-receiving face 654, 655, 656, 657 has a surface at a same step angle θ, as shown in FIG. 6A. The light-receiving faces 654, 655, 656, 657 are further disposed at an angle Φ with respect to vertical 660, as shown in FIG. 6C. Incoming light impinges on the stepped folding prism 650 at an incident angle γ with respect to a line 661 perpendicular to the stepped surface 651, as shown in FIG. 6B, with the light arriving from the demultiplexer block (not shown), such as the demultiplexer block 140 of FIG. 4. The stepped folding prism 650 refracts the incoming light by a third angle δ due to the angle θ of the stepped surface 651 and the incident angle γ of the impinging light. The third angle δ in FIGS. 6A-6C may be different from the third angle δ in FIGS. 5A-5C. The light is refracted in the horizontal plane 662 in FIG. 6B at the third angle δ by a face of the stepped surface 651. The stepped folding prism 650 also refracts the light at a first angle α at the stepped surface 651 due to the angle Φ of the stepped surface 651, wherein the entering light is refracted a few degrees downward in FIG. 6C. The light is reflected farther down at the second surface 652, at a second angle β, due to total internal reflection. The light then travels downwards through the third surface 653, exiting into a focal lens array (not shown), such as the focal lens array 160 of FIG. 1. The light travels substantially perpendicular to the third surface 653 in some embodiments as the light exits the stepped folding prism 650.

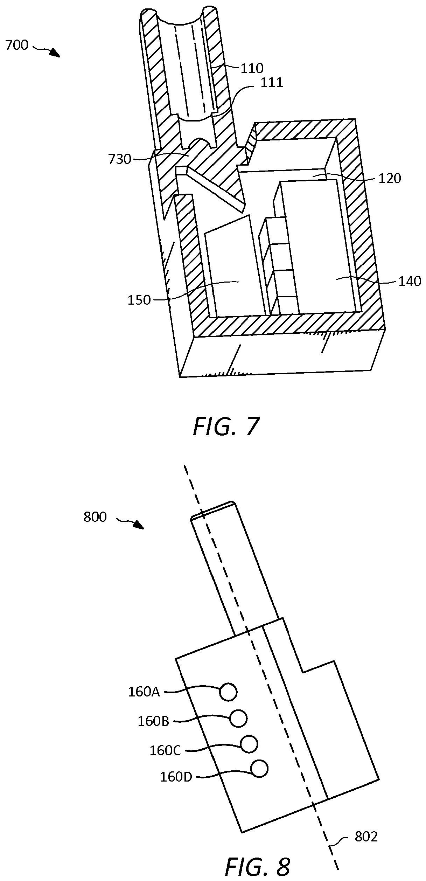

FIG. 7 shows a sectional view of a single molded piece demultiplexer 700 formed using injection molding. In various embodiments, a receptacle 110, a collimate lens 111, and a substrate 120 are part of the single molded piece demultiplexer 700. For example, single molded piece demultiplexer 700 can be made from Ultem^{®} polyetherimide (PEI) manufactured by GE Plastics. Ultem^{®} PEI has higher thermal and chemical stability than other similar plastics. In addition, Ultem^{®} PEI can include an anti-reflective coating at the surface where light beams pass in order to reduce back-reflection. In various embodiments, the single molded piece demultiplexer 700 can further comprise a reflector 730 formed as part of the single molded piece, such as reflector 130 of FIGS. 1A-C, a demultiplexer block 140, a folding prism 150, or any combination thereof. In other embodiments, the reflector 730 is separate from the single molded piece demultiplexer 700 and bonded to the single molded piece demultiplexer 700 after alignment so as to be adjustably-affixed, such as internal and external reflectors 230 and 330 of FIGS. 2A-B and 3A-B, respectively, in both linear position and angular orientation to control the incident angle and incident location into the demultiplexer block 140. The reflector 730 and the folding prism 150 can also be made of Ultem^{®} PEI, and can include anti-reflective coatings.

As illustrated in FIG. 7, the reflector 730, the demultiplexer block 140, and the folding prism 150 are positioned in or parallel to a first plane, wherein the optical path is directed through the reflector 730, the demultiplexer block 140, and to the folding prism 150, substantially parallel to and/or coplanar with the first plane. The optical path of the light beam traveling through the reflector 730 and the demultiplexer block 140 to the folding prism 150 defines the first plane or is substantially parallel to and/or coplanar with the first plane. The refracted multiple wavelengths exit the folding prism 150 in a direction perpendicular, or substantially perpendicular, to the first plane, and orthogonal to the substrate 120 (and therefore orthogonal to the first plane). For example, the refracted multiple wavelengths, such as wavelengths (λ1, λ2, λ3, and λ4), exit the folding prism 150 at 90°, within 85° to 95°, or within 80° to 100° from the direction of the refracted multiple wavelengths exiting the folding prism 150 relative to the first plane.

In accordance with various embodiments, the demultiplexer package, such as optical wavelength division multiplexer 100, is designed such that an optical path through the demultiplexer block 140 is substantially parallel to the substrate 120. In addition, the light focal points of the focal lens array 160 are positioned off a centerline of the demultiplexer package in some embodiments. For example, FIG. 8 illustrates focal lenses 160A-D offset from a centerline 802 of a demultiplexer package 800. This offset creates more space for layout of other electronic components. For example, the offset of the focal lenses 160A-D creates more space for radio frequency (RF) trace to fanout.

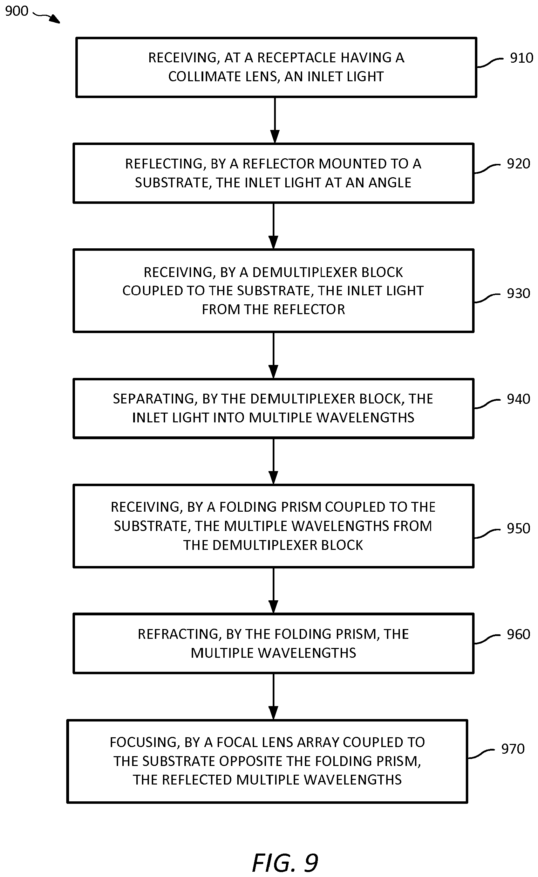

FIG. 9 is a flowchart of a method 900 of optical demultiplexing of multiple wavelengths according to an embodiment. With reference to FIG. 9, the exemplary method 900 of optical demultiplexing comprises the steps of receiving, at a receptacle having a collimate lens, an inlet light 910; reflecting, by a reflector mounted to a substrate, the inlet light at an angle 920; receiving, by a demultiplexer block coupled to the substrate, the inlet light from the reflector 930; separating, by the demultiplexer block, the inlet light into multiple wavelengths 940; receiving, by a folding prism coupled to the substrate, the multiple wavelengths from the demultiplexer block 950; refracting, by the folding prism, the multiple wavelengths 960; and focusing, by a focal lens array coupled to the substrate opposite the folding prism, the refracted multiple wavelengths 970.

While several embodiments have been provided in the present disclosure, it may be understood that the disclosed systems and methods might be embodied in many other specific forms without departing from the scope of the present disclosure. The present examples are to be considered as illustrative and not restrictive, and the intention is not to be limited to the details given herein. For example, the various elements or components may be combined or integrated in another system or certain features may be omitted, or not implemented.

In addition, techniques, systems, subsystems, and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component whether optically, mechanically, or otherwise. Other examples of changes, substitutions, and alterations are ascertainable by one skilled in the art and may be made without departing from the scope disclosed herein.

Although the present disclosure has been described with reference to specific features and embodiments thereof, it is evident that various modifications and combinations can be made thereto without departing from scope of the disclosure.

## Claims

1. An optical wavelength division multiplexer/demultiplexer, comprising:
a receptacle (110) having a collimate lens and configured to receive an inlet light or receive a combined beam from a reflector (130) and transmit an outlet light;
a substrate (120) having a first and a second side;
said reflector (130) is mounted to the second side of the substrate and configured to reflect the inlet light or the combined beam at an angle;
a multiplexer/demultiplexer block (140) coupled to the second side of the substrate (120) and configured to: when acting as a demultiplexer block, receive the inlet light from the reflector (130), and separate the inlet light into first multiple wavelengths, or, when acting as a multiplexer block, receive second multiple wavelengths from a folding prism (650), the second multiple wavelengths being intended for transmission, and to combine the second multiple wavelengths into the combined beam; and
a focal lens array (160) coupled to the first side of the substrate (120) opposite to the folding prism (650), wherein the folding prism is coupled to the second side of the substrate (120), wherein the focal lens array (160) is configured to receive and focus the first multiple wavelengths or configured to receive and focus the second multiple wavelengths intended for transmission, **characterized in that**
the folding prism is a stepped folding prism (650) having a plurality of faces (654, 655, 656, 657) that together form a stepped surface (651) of the stepped folding prism, a second surface (652), and a third surface (653), wherein each face (654, 655, 656, 657) has a surface at a same step angle θ and is further disposed at an angle Φ with respect to the vertical (660) of the third surface (653), wherein the folding prism is coupled to the substrate (120) and configured to: receive the first multiple wavelengths from the multiplexer/demultiplexer block (140) through the plurality of faces (654, 655, 656, 657) to refract them and to reflect them at the second surface (652) due to total internal reflection, so that the light then travels through the third surface (653) into the focal lens array (160) when the optical wavelength division multiplexer/demultiplexer acts as an optical wavelength division demultiplexer, or, receive the second multiple wavelengths from the focal lens array through the third surface (653) to refract them and to reflect them at the second surface (652) due to total internal reflection, so that the light then travels through the plurality of faces (654, 655, 656, 657) into the multiplexer/demultiplexer block (140) when the optical wavelength division multiplexer/demultiplexer acts as an optical wavelength division multiplexer.

2. The optical wavelength division multiplexer/demultiplexer of claim 1, wherein the reflector (130) is a fixed reflector or an adjustably-affixed reflector.

3. The optical wavelength division multiplexer/demultiplexer of any of claims 1 to 2, wherein the reflector (130) is either an external reflector or an internal reflector.

4. The optical wavelength division multiplexer/demultiplexer of claim 2, wherein a surface of the reflector (130) is coated with at least one of a high reflective coating or a metal layer.

5. The optical wavelength division multiplexer/demultiplexer of any of claims 1 to 4, wherein an optical path of the inlet light is directed through the reflector (130) and the multiplexer/demultiplexer block (140) to the folding prism in a first plane, and wherein the refracted multiple wavelengths exit the focal lens array in a direction perpendicular to the first plane.

6. A method of optical wavelength division demultiplexing, comprising:
receiving, at a receptacle having a collimate lens, an inlet light;
reflecting, by a reflector mounted to a substrate having a first and a second side, the inlet light at an angle;
receiving, by a demultiplexer block coupled to the second side of the substrate, the inlet light from the reflector;
separating, by the demultiplexer block, the inlet light into multiple wavelengths;
receiving, by a folding prism coupled to the first side of the substrate (120) having the at least one light-receiving face, a second surface (652), and a third surface (653) and being coupled to the substrate and through the at least one light-receiving face, the multiple wavelengths from the demultiplexer block;
refracting the multiple wavelengths received by the folding prism and reflecting them at the second surface (652) by means of total internal reflection, so that the light then travels through the third surface (653) into a focal lens array (160); and
focusing, by a focal lens array coupled to the substrate opposite the folding prism, the refracted multiple wavelengths coupled to the second side of the substrate (120), **characterized in that**
the folding prism is a stepped folding prism and the inlet light is received through a plurality of light-receiving faces (654, 655, 656, 657) that together form a stepped surface of the stepped folding prism wherein each face (654, 655, 656, 657) has a surface at a same step angle θ and is further disposed at an angle Φ with respect to the vertical (660) of the third surface.

7. The method of claim 6, wherein the receptacle, the substrate, and the folding prism are part of a single molded piece, and wherein the reflector is separate from the single molded piece and bonded to the single molded piece after alignment.

8. The method of claim 7, wherein the reflector is adjusted in both linear position and angular orientation before being affixed to the substrate to control an incident angle and an incident location of the inlet light reflected into the demultiplexer block.

9. The method of any of claims 6 to 8, wherein an optical path of the inlet light is directed through the reflector and the demultiplexer block to the folding prism in a first plane, and wherein the refracted multiple wavelengths exit the focal lens array in a direction perpendicular to the first plane.

## Patentansprüche

1. Optischer Wellenlängenmultiplexer/-demultiplexer, umfassend:
eine Aufnahme (110) mit einer Kollimatorlinse, und ausgestaltet, um ein Eingangslicht zu empfangen oder einen kombinierten Strahl von einem Reflektor (130) zu empfangen und ein Ausgangslicht zu übertragen;
ein Substrat (120) mit einer ersten und einer zweiten Seite;
wobei der Reflektor (130) an der zweiten Seite des Substrats montiert ist und ausgestaltet ist, um das Eingangslicht oder den kombinierten Strahl in einem Winkel zu reflektieren;
einen Multiplexer-/Demultiplexer-Block (140), der an die zweite Seite des Substrats (120) gekoppelt ist und so ausgestaltet ist, dass er, wenn er als Demultiplexerblock agiert, das Eingangslicht von dem Reflektor (130) empfängt und das Eingangslicht in erste mehrere Wellenlängen trennt, oder, wenn er als Multiplexerblock agiert, zweite mehrere Wellenlängen von einem Faltprisma (650) empfängt, wobei die zweiten mehreren Wellenlängen zur Übertragung vorgesehen sind, und die zweiten mehreren Wellenlängen zu dem kombinierten Strahl kombiniert; und
ein Fokuslinsenarray (160), das an die erste Seite des Substrats (120) gegenüber dem Faltprisma (650) gekoppelt ist, wobei das Faltprisma an die zweite Seite des Substrats (120) gekoppelt ist, wobei das Fokuslinsenarray (160) ausgestaltet ist, um die ersten mehreren Wellenlängen zu empfangen und zu fokussieren, oder ausgestaltet ist, um die zweiten mehreren Wellenlängen, die zur Übertragung vorgesehen sind, zu empfangen und zu fokussieren,
**dadurch gekennzeichnet, dass**
das Faltprisma ein gestuftes Faltprisma (650) ist, mit einer Vielzahl von Flächen (654, 655, 656, 657), die zusammen eine gestufte Oberfläche (651) des gestuften Faltprismas bilden, einer zweiten Oberfläche (652) und einer dritten Oberfläche (653), wobei jede Fläche (654, 655, 656, 657) eine Oberfläche mit dem gleichen Stufenwinkel θ hat und des Weiteren in einem Winkel Φ in Bezug zu der Vertikalen (660) der dritten Oberfläche (653) angeordnet ist, wobei das Faltprisma an das Substrat (120) gekoppelt ist und ausgestaltet ist, um die ersten mehreren Wellenlängen von dem Multiplexer-/Demultiplexer-Block (140) durch die Vielzahl der Flächen (654, 655, 656, 657) hindurch zu empfangen, um sie zu brechen und infolge von innerer Totalreflexion an der zweiten Oberfläche (652) zu reflektieren, so dass das Licht sich dann durch die dritte Oberfläche (653) hindurch in das Fokuslinsenarray (160) bewegt, wenn der optische Wellenlängenmultiplexer/-demultiplexer als optischer Wellenlängendemultiplexer agiert, oder die zweiten mehreren Wellenlängen von dem Fokuslinsenarray durch die dritte Oberfläche (653) hindurch zu empfangen, um sie zu brechen und infolge von innerer Totalreflexion an der zweiten Oberfläche (652) zu reflektieren, so dass das Licht sich dann durch die Vielzahl von Flächen (654, 655, 656, 657) in den Multiplexer-/Demultiplexer-Block (140) bewegt, wenn der optische Wellenlängenmultiplexer/-demultiplexer als optischer Wellenlängenmultiplexer agiert.

2. Optischer Wellenlängenmultiplexer/-demultiplexer nach Anspruch 1, wobei der Reflektor (130) ein fest installierter Reflektor oder ein einstellbar angebrachter Reflektor ist.

3. Optischer Wellenlängenmultiplexer/-demultiplexer nach einem der Ansprüche 1 bis 2, wobei der Reflektor (130) entweder ein externer Reflektor oder ein interner Reflektor ist.

4. Optischer Wellenlängenmultiplexer/-demultiplexer nach Anspruch 2, wobei eine Oberfläche des Reflektors (130) mit mindestens einer von einer hochreflektierenden Beschichtung oder einer Metallschicht beschichtet ist.

5. Optischer Wellenlängenmultiplexer/-demultiplexer nach einem der Ansprüche 1 bis 4, wobei ein optischer Pfad des Eingangslichts durch den Reflektor (130) und den Multiplexer-/Demultiplexer-Block (140) hindurch zu dem Faltprisma in einer ersten Ebene geführt wird, und wobei die gebrochenen mehreren Wellenlängen das Fokuslinsenarray in einer Richtung senkrecht zu der ersten Ebene verlassen.

6. Verfahren zum optischen Wellenlängendemultiplexing, umfassend:
Empfangen eines Eingangslichts an einer Aufnahme mit einer Kollimatorlinse;
Reflektieren des Eingangslichts mittels eines an einem Substrat mit einer ersten und einer zweiten Seite montierten Reflektors in einem Winkel;
Empfangen des Eingangslichts von dem Reflektor mittels eines Demultiplexerblocks, der an die zweite Seite des Substrats gekoppelt ist;
Trennen des Eingangslichts in mehrere Wellenlängen mittels des Demultiplexerblocks;
Empfangen der mehreren Wellenlängen von dem Demultiplexerblock mittels eines Faltprismas, das an die erste Seite des Substrats (120) gekoppelt ist, mit der mindestens einen Lichtaufnahmefläche, einer zweiten Oberfläche (652) und einer dritten Oberfläche (653), und gekoppelt an das Substrat und durch die mindestens eine Lichtaufnahmefläche hindurch;
Brechen der mittels des Faltprisma empfangenen mehreren Wellenlängen und Reflektieren derselben an der zweiten Oberfläche (652) mittels innerer Totalreflexion, so dass sich das Licht dann durch die dritte Oberfläche (653) hindurch zu einem Fokuslinsenarray (160) bewegt;
Fokussieren der gebrochenen mehreren Wellenlängen, gekoppelt an die zweite Seite des Substrats (120), mittels eines Fokuslinsenarrays, das an das Substrat gegenüber von dem Faltprisma gekoppelt ist, **dadurch gekennzeichnet, dass**
das Faltprisma ein gestuftes Faltprisma ist, und das Eingangslicht durch eine Vielzahl von Lichtaufnahmeflächen (654, 655, 656, 657) hindurch empfangen wird, die zusammen eine gestufte Oberfläche des gestuften Faltprismas bilden, wobei jede Fläche (654, 655, 656, 657) eine Oberfläche mit dem gleichen Stufenwinkel θ hat und des Weiteren in einem Winkel φ in Bezug zu der Vertikalen (660) der dritten Oberfläche angeordnet ist.

7. Verfahren nach Anspruch 6, wobei die Aufnahme, das Substrat und das Faltprisma Teil eines einstückigen Formteils sind, und wobei der Reflektor separat von dem einstückigen Formteil vorliegt und nach der Ausrichtung an das einstückige Formteil gebondet wird.

8. Verfahren nach Anspruch 7, wobei der Reflektor sowohl in der linearen Position als auch in der Winkelorientierung justiert wird, bevor er an dem Substrat angebracht wird, um einen Einfallswinkel und einen Einfallsort des Eingangslichts zu steuern, das in den Demultiplexerblock reflektiert wird.

9. Verfahren nach einem der Ansprüche 6 bis 8, wobei ein optischer Pfad des Eingangslichts durch den Reflektor und den Demultiplexer-Block hindurch zu dem Faltprisma in einer ersten Ebene geführt wird, und wobei die gebrochenen mehreren Wellenlängen das Fokuslinsenarray in einer Richtung senkrecht zu der ersten Ebene verlassen.

## Revendications

1. Multiplexeur/démultiplexeur optique par répartition en longueur d'onde, comprenant :
une embase (110) pourvue d'une lentille collimatrice et configurée pour recevoir une lumière d'entrée ou recevoir un faisceau combiné depuis un réflecteur (130) et transmettre une lumière de sortie ;
un substrat (120) pourvu d'un premier et d'un deuxième côté ;
ledit réflecteur (130) étant monté sur le deuxième côté du substrat et configuré pour réfléchir la lumière d'entrée ou le faisceau combiné selon un angle ;
un bloc multiplexeur/démultiplexeur (140) couplé au deuxième côté du substrat (120) et configuré pour : lorsqu'il joue le rôle d'un bloc démultiplexeur, recevoir la lumière d'entrée depuis le réflecteur (130) et séparer la lumière d'entrée en de multiples premières longueurs d'onde ou, lorsqu'il joue le rôle d'un bloc multiplexeur, recevoir de multiples deuxièmes longueurs d'onde depuis un prisme de repli (650), les multiples deuxièmes longueurs d'onde étant destinées à la transmission, et pour combiner les multiples deuxièmes longueurs d'onde en le faisceau combiné ; et
un réseau lenticulaire de focalisation (160) couplé au premier côté du substrat (120) à l'opposé du prisme de repli (650), le prisme de repli étant couplé au deuxième côté du substrat (120), le réseau lenticulaire de focalisation (160) étant configuré pour recevoir et focaliser les multiples premières longueurs d'onde ou configuré pour recevoir et focaliser les multiples deuxièmes longueurs d'onde destinées à la transmission,
**caractérisé en ce que**
le prisme de repli est un prisme de repli échelonné (650) pourvu d'une pluralité de faces (654, 655, 656, 657) qui forment conjointement une surface échelonnée (651) du prisme de repli échelonné, d'une deuxième surface (652) et d'une troisième surface (653), chaque face (654, 655, 656, 657) étant pourvue d'une surface formant un même angle d'échelon θ et étant en outre agencée en formant un angle Φ avec la verticale (660) de la troisième surface (653), le prisme de repli étant couplé au substrat (120) et configuré pour : recevoir les multiples premières longueurs d'onde depuis le bloc multiplexeur/démultiplexeur (140) à travers la pluralité de faces (654, 655, 656, 657) afin de les réfracter et de les réfléchir au niveau de la deuxième surface (652) par réflexion totale interne, de sorte que la lumière se propage ensuite à travers la troisième surface (653) jusque dans le réseau lenticulaire de focalisation (160) lorsque le multiplexeur/démultiplexeur optique par répartition en longueur d'onde joue le rôle d'un démultiplexeur optique par répartition en longueur d'onde, ou recevoir les multiples deuxièmes longueurs d'onde depuis le réseau lenticulaire de focalisation à travers la troisième surface (653) pour les réfracter et pour les réfléchir au niveau de la deuxième surface (652) par réflexion totale interne, de sorte que la lumière se propage ensuite à travers la pluralité de faces (654, 655, 656, 657) jusque dans le bloc multiplexeur/démultiplexeur (140) lorsque le multiplexeur/démultiplexeur optique par répartition en longueur d'onde joue le rôle d'un multiplexeur optique par répartition en longueur d'onde.

2. Multiplexeur/démultiplexeur optique par répartition en longueur d'onde selon la revendication 1, dans lequel le réflecteur (130) est un réflecteur fixe ou un réflecteur fixé de manière réglable.

3. Multiplexeur/démultiplexeur optique par répartition en longueur d'onde selon l'une quelconque des revendications 1 à 2, dans lequel le réflecteur (130) est soit un réflecteur externe, soit un réflecteur interne.

4. Multiplexeur/démultiplexeur optique par répartition en longueur d'onde selon la revendication 2, dans lequel une surface du réflecteur (130) est revêtue d'un revêtement fortement réfléchissant et/ou d'une couche métallique.

5. Multiplexeur/démultiplexeur optique par répartition en longueur d'onde selon l'une quelconque des revendications 1 à 4, dans lequel un trajet optique de la lumière d'entrée est dirigé à travers le réflecteur (130) et le bloc multiplexeur/démultiplexeur (140) jusqu'au prisme de repli dans un premier plan, et dans lequel les multiples longueurs d'onde réfractées sortent du réseau lenticulaire de focalisation dans une direction perpendiculaire au premier plan.

6. Procédé de démultiplexage optique par répartition en longueur d'onde, comprenant :
la réception, au niveau d'une embase pourvue d'une lentille collimatrice, d'une lumière d'entrée ;
la réflexion, par un réflecteur monté sur un substrat pourvu d'un premier et d'un deuxième côté, de la lumière d'entrée selon un angle ;
la réception, par un bloc démultiplexeur couplé au deuxième côté du substrat, de la lumière d'entrée depuis le réflecteur ;
la séparation, par le bloc démultiplexeur, de la lumière d'entrée en de multiples longueurs d'onde ;
la réception, par un prisme de repli couplé au premier côté du substrat (120) pourvu de l'au moins une face de réception de lumière, d'une deuxième surface (652) et d'une troisième surface (653) et couplé au substrat, et à travers l'au moins une face de réception de lumière, les multiples longueurs d'onde depuis le bloc démultiplexeur ;
la réfraction des multiples longueurs d'onde reçues par le prisme de repli et leur réflexion au niveau de la deuxième surface (652) par réflexion totale interne, de sorte que la lumière se propage ensuite à travers la troisième surface (653) jusque dans un réseau lenticulaire de focalisation (160) ; et
la focalisation, par un réseau lenticulaire de focalisation couplé au substrat à l'opposé du prisme de repli, des multiples longueurs d'onde réfractées couplées au deuxième côté du substrat (120), **caractérisé en ce que**
le prisme de repli est un prisme de repli échelonné et la lumière d'entrée est reçue à travers une pluralité de faces de réception de lumière (654, 655, 656, 657) qui forment conjointement une surface échelonnée du prisme de repli échelonné, chaque face (654, 655, 656, 657) étant pourvue d'une surface formant un même angle d'échelon θ et étant en outre agencée en formant un angle Φ avec la verticale (660) de la troisième surface.

7. Procédé selon la revendication 6, dans lequel l'embase, le substrat et le prisme de repli font partie d'une unique pièce moulée, et dans lequel le réflecteur est distinct de l'unique pièce moulée et collé sur l'unique pièce moulée après alignement.

8. Procédé selon la revendication 7, dans lequel le réflecteur est réglé à la fois en position linéaire et en orientation angulaire avant d'être fixé au substrat afin d'ajuster un angle d'incidence et un endroit d'incidence de la lumière d'entrée réfléchie dans le bloc démultiplexeur.

9. Procédé selon l'une quelconque des revendications 6 à 8, dans lequel un trajet optique de la lumière d'entrée est dirigé à travers le réflecteur et le bloc démultiplexeur jusqu'au prisme de repli dans un premier plan, et dans lequel les multiples longueurs d'onde réfractées sortent du réseau lenticulaire de focalisation dans une direction perpendiculaire au premier plan.
